(19) Europäisches Patentamt
European Patent Office
Office européen des brevets

(11) **EP 1 553 651 A1**

(12) **EUROPEAN PATENT APPLICATION**
published in accordance with Art. 158(3) EPC

(43) Date of publication:
**13.07.2005 Bulletin 2005/28**

(51) Int Cl.[7]: **H01M 8/02**, H01M 8/10

(21) Application number: **03792735.7**

(22) Date of filing: **20.08.2003**

(86) International application number:
**PCT/JP2003/010498**

(87) International publication number:
**WO 2004/019438 (04.03.2004 Gazette 2004/10)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **23.08.2002 JP 2002244288**
**09.01.2003 JP 2003003191**

(71) Applicant: **Honda Giken Kogyo Kabushiki Kaisha Tokyo 107-8556 (JP)**

(72) Inventors:
• **NISHI, Yoshitsugu Honda Engineering Co., Ltd. Sayama-shi, Saitama 350-1381 (JP)**
• **ISHIGURO, Kenichi Honda Engineering Co., Ltd. Sayama-shi, Saitama 350-1381 (JP)**

(74) Representative: **Piésold, Alexander J. Frank B. Dehn & Co., 179 Queen Victoria Street London EC4V 4EL (GB)**

(54) **FUEL CELL SEPARATOR AND ITS MANUFACTURING METHOD**

(57)      Fuel cell separators (18) sandwich an anode (13) and a cathode (14) which are installed along both sides of an electrolyte film (12) and diffusion layers (16, 16). The separators (18) are made of a mixture material containing a thermoplastic resin selected from ethylene-vinyl acetate copolymers and ethylene-ethyl acrylate copolymers and carbon particles selected from at least one of Ketjen black, graphite and acetylene black. Since the thermoplastic resin is excellent in especially flexibility, the contact surfaces of the separators (18) in contact with the diffusion layers (15, 16) can be a portion excellent in sealability by adding the thermoplastic resin excellent in sealability to the separators (18) .

FIG. 1

**Description**

Technical Field

This invention relates to a fuel cell separator and a manufacturing method thereof, and particularly to a fuel cell separator for constituting a cell module by sandwiching from both sides an anode and a cathode set against an electrolyte film, and a manufacturing method thereof.

Background Art

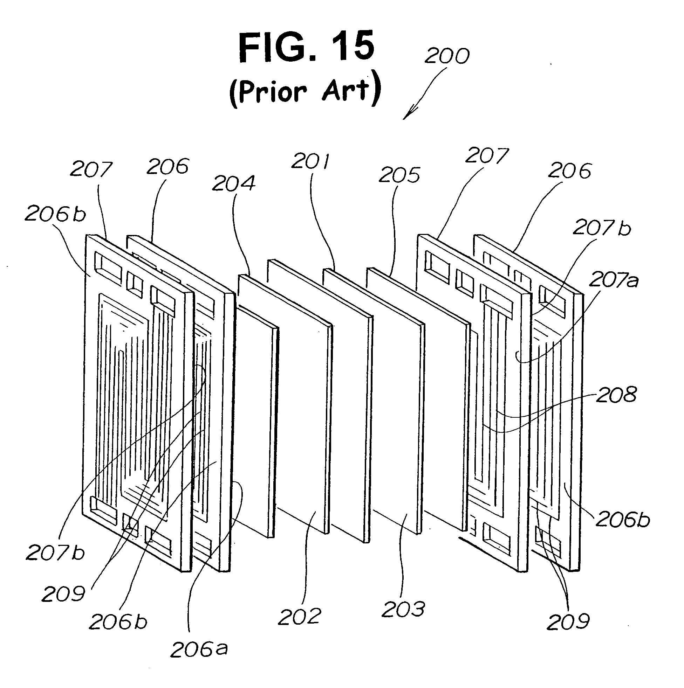

A fuel cell is a cell which utilizes the opposite principle to the electrolysis of water to obtain electricity by the process of reacting hydrogen with oxygen to obtain water. Because generally a fuel gas is substituted for hydrogen and air or an oxidant gas is substituted for oxygen, the terms fuel gas, air and oxidant gas are often used. In the following, the basic construction of an ordinary fuel cell will be described with reference to Fig. 15.

As shown in Fig. 15, a cell module of a fuel cell 200 is made by disposing an anode 202 and a cathode 203 on opposite faces of an electrolyte film 201 and sandwiching these electrodes 202, 203 with a first separator 206 and a second separator 207 via diffusion layers 204, 205. A fuel cell 200 is obtained by stacking many of these cell modules together.

It is necessary for the fuel gas to be brought into contact with the anode 202 effectively. To this end, many grooves (not shown) are provided in the face 206a of the first separator 206, and by the grooves being covered when the diffusion layer 204 is disposed on the face 206a of the first separator 206, first flow passages (not shown) constituting fuel gas flow passages are formed.

It is necessary for the oxidant gas to be brought into contact with the cathode 203 effectively. To this end, many grooves 208... are provided in the face 207a of the second separator 207, and by the grooves 208... being covered when the diffusion layer 205 is disposed on the face 207a of the second separator 207, second flow passages (not shown) constituting oxidant gas flow passages are formed.

And in the first separator 206, many cooling water passage grooves 209... are provided in the reverse face 206b to the face 206a, and many cooling water passage grooves (not shown) are provided in the reverse face 207b to the face 207a in the second separator 207. By the first and second separators 206, 207 being brought face to face, the cooling water passage grooves 209... of each are brought together to form cooling water passages (not shown).

As a method of manufacturing these first and second separators 206 and 207, for example the 'Fuel Cell Separator and Manufacturing Method Thereof' in Japanese Patent Publication JP-A-2001-126744 is known.

In this published manufacturing method, conductive particles mixed with a thermoplastic resin are heated and kneaded; this mixture is extrusion-molded and formed into a long sheet with rollers; this long sheet is cut to predetermined dimensions to make blanks; and first and second separators 206, 207 are obtained by forming gas passage and cooling water passage grooves in both sides or one side of these blanks.

To form the first and second flow passages by bringing the diffusion layers 204, 205 together with the first and second separators 206, 207, it is necessary for the diffusion layers 204, 205 to be brought together with the respective faces 206a, 207a of the first and second separators 206, 207 in an intimately contacting state. However, to bring the diffusion layers 204, 205 together with the faces 206a, 207a of the first and second separators 206, 207 in an intimately contacting state is difficult, and there is a risk of gaps arising locally between the faces 206a, 207a of the first and second separators and the diffusion layers 204, 205.

Because the cooling water passages are formed in the first separator 206 and the second separator 207 by these two being brought together, it is necessary for the first separator 206 and the second separator 207 to be brought together in an intimately contacting state. However, to bring the first separator 206 and the second separator 207 together in an intimately contacting state is difficult, and there is a risk of gaps arising locally between the first separator 206 and the second separator 207.

Because of this, the development of a fuel cell separator has been awaited with which it is possible to bring together the faces 206a, 207a of the first and second separators 206, 207 with the diffusion layers 204, 205 in an intimately contacting state and also it is possible to bring together the first separator 206 and the second separator 207 in an intimately contacting state.

In a fuel cell separator manufacturing method of related art, a long sheet is cut to predetermined dimensions to make blanks and then grooves for gas passages and cooling water passages are formed after that in the individual blanks. With this fuel cell separator manufacturing method, when the grooves are formed in the blanks, each individual blank has to be positioned in a correct position. Consequently, the positioning of the blanks takes time, and this has been a hindrance to raising productivity. Because of this, the development of a manufacturing method has been awaited with which it is possible to mold fuel cell separators efficiently.

Known fuel cells include those which, as shown in for example Japanese Patent Publication JP-A-2002-97375, 'Thermoplastic Resin Composition and Molding', carbon fibers or carbon nanotubes are blended with thermoplastic resin as a fuel cell separator composition. The content of this publication will now be discussed in detail.

When a separator is assembled to a fuel cell, it is necessary for many gas passage grooves and cooling water passage grooves to be molded in both sides of it. Consequently, a starting material having excellent moldability must be used for the separator. Also, a function of collecting current from an electrode is required of the separator, and so it must have excellent electrical conductivity. To fulfil these requirements, in this known technology, as the constituents of the separator, polyphenylene sulfide (a thermoplastic resin), which has excellent moldability, is used, and carbon fibers or carbon nanotubes, which have excellent electrical conductivity, are used.

Explaining an example in detail, as constituents of a separator, 30wt% of carbon fibers, 0.5wt% of carbon nanotubes, and 69.5wt% of polyphenylene sulfide (thermoplastic resin) were prepared, and these were mixed to obtain a mixture. Thereafter, separators were inj ection-molded with this mixture as the starting material.

By using 69.5wt% of the thermoplastic resin polyphenylene sulfide, good injection-moldability can be secured. And by using 30wt% of carbon fiber and 0.5wt% of carbon nanotubes, a certain level of electrical conductivity is secured.

However, in the publication mentioned above, because a large amount of carbon fiber is included in the starting material, directionality of the carbon fiber occurs markedly, and the separator becomes anisotropic. Consequently, there is a risk of warping and distortion arising in the separator.

When there are gas passage grooves and cooling water passage grooves in both sides as in a separator, weld lines tend to appear. Consequently, there is a risk of the strength of the separator falling drastically.

Also, in the above-mentioned publication, to raise the electrical conductivity of the separator, carbon fibers and carbon nanotubes are included in the separator starting material. However, it is difficult to raise the electrical conductivity sufficiently by including carbon fibers in the starting material.

Specifically, in the above-mentioned publication, the volume resistivity is measured by the double ring method (ASTM D257) . However, the double ring method is suited for the measurement of high resistances, and in measurement results obtained by the present inventors it was found that compared to four probe method, which is suited to the measurement of low resistances, volume resistivities are considerably lower.

Furthermore, in the last few years high performance has come to be required of fuel cells, and to satisfy this requirement the introduction of separators having still better conductivity is awaited.

Disclosure of the Invention

In a first aspect, this invention provides a fuel cell separator for sandwiching from both sides via diffusion layers an anode and a cathode set against an electrolyte film, made of a mixture of a thermoplastic resin selected from among ethylene / vinyl acetate copolymers and ethylene / ethyl acrylate copolymers and a at least one type of carbon particle selected from Ketjen black, graphite and acetylene black.

Ethylene / vinyl acetate copolymers and ethylene / ethyl acrylate copolymers have particularly good flexibility even among thermoplastic resins. By including a thermoplastic resin with superior flexibility like this in the separator, the contact faces of the separator that make contact with the diffusion layers are given elasticity, and the contact faces are given an excellent sealing characteristic. Consequently, the mating parts of the separator contact faces and the diffusion layers can be kept intimate. Therefore, it is not necessary for a seal material to be applied between the separator contact faces and the diffusion layers.

And, as a result of just including a thermoplastic resin selected from among ethylene / vinyl acetate copolymers and ethylene / ethyl acrylate copolymers in the separator, the separator contact faces are changed into parts having a good sealing characteristic. By this means it is possible to produce a well-sealing separator with good efficiency.

On the other hand, the carbon particles consisting of Ketjen black, graphite and/or acetylene black have electrical conductivity, and by these carbon particles being included in the separator, conductivity of the separator is secured.

Preferably, the proportion of the thermoplastic resin in the mixture is made 14 to 20wt% and the proportion of the carbon particles is 80 to 86wt%.

The reasons for setting the proportion of the thermoplastic resin to 14 to 20wt% are as follows. That is, when the thermoplastic resin content is less than 14wt%, it is difficult to secure enough elasticity, i.e. sealing characteristic, of the contact faces of the separator, because the thermoplastic resin content is too low. When on the other hand the thermoplastic resin content exceeds 20wt%, the amount of the carbon particle included in the separator is too low, and it is difficult to secure conductivity of the separator adequately. Accordingly, the thermoplastic resin content was set to 14 to 20wt% to secure sealing characteristic of the separator and adequately secure electrical conductivity of the separator.

Preferably, 3 to 20wt% of the carbon particles is made Ketjen black.

Ketjen black is a material with particularly good electrical conductivity compared to other carbon blacks, and by Ketjen black being included the electrical conductivity of the separator is raised. The reasons for setting the Ketjen black content to 3 to 20wt% are that if the Ketjen black content is less than 3wt% then it is difficult to obtain an effect of having included Ketjen black because the Ketjen black content is too low. Consequently, when the Ketjen black content is less than 3wt%, there is a risk of it not being possible to secure electrical conductivity of the separator adequately.

If on the other hand the Ketjen black content exceeds 20wt%, kneading becomes difficult because the Ketjen black content is too large. Although it is conceivable to make kneading possible by adding a solvent, there is a risk of costs increasing as a result of using a solvent. Furthermore, even if a solvent is added and kneading is completed successfully, the fluidity of the knead including the Ketjen black is poor and for example at the time of molding it is difficult to obtain the predetermined shape.

Accordingly, the Ketjen black content was set to 3 to 20wt% to secure adequate electrical conductivity of the separator and also achieve facilitation of kneading and secure moldability well.

Preferably, the proportions in the mixture are made 14 to 20wt% thermoplastic resin, 70 to 83.5wt% carbon particle, and 2.5 to 10wt% glass fiber or carbon fiber.

By glass fiber or carbon fiber being mixed into the mixture, the rigidity of the separator is raised. The reasons for setting the glass fiber or carbon fiber content to 2.5 to 10wt% are that when the glass fiber or carbon fiber content is less than 2.5wt%, it is difficult to raise the rigidity of the separator because the glass fiber or carbon fiber content is too low. When on the other hand the glass fiber or carbon fiber content exceeds 10wt%, the glass fiber or carbon fiber content is too large and it is difficult to disperse the glass fiber or carbon fiber uniformly in the mixture and extrusion-molding and pressing of the mixture become problematic. Accordingly, the glass fiber or carbon fiber content was set to 2.5 to 10wt%, to ensure a sufficient glass fiber or carbon fiber content and raise the rigidity of the separator, and to disperse the glass fiber or carbon fiber uniformly and obtain a mixture with good moldability and thereby raise productivity.

In a second aspect, the invention provides a method for manufacturing a fuel cell separator, including: a step of selecting a thermoplastic resin from among ethylene / vinyl acetate copolymers and ethylene / ethyl acrylate copolymers and selecting at least one type of carbon particles from Ketjen black, graphite and acetylene black; a step of obtaining a mixture by mixing the selected thermoplastic resin and carbon particles; a step of obtaining a sheet material by extrusion-molding the mixture with an extruder; a step of forming gas flow passage grooves in the surface of the sheet material by pressing it; and a step of obtaining fuel cell separators by cutting the sheet material with the gas flow passages formed in it to a predetermined shape.

With the mixture in the form of a sheet material, gas passage grooves are press-formed in its surface and then the sheet material is cut to a predetermined shape to obtain separators. By press-forming the gas passage grooves into the material in sheet form in this way it is possible to form the gas passage grooves continuously with good efficiency and to raise the productivity of the separator.

In a third aspect, the invention provides a fuel cell separator for sandwiching from both sides via diffusion layers an anode and a cathode set against an electrolyte film, characterized in that it is made of a mixture including 10 to 34wt% polyphenylene sulfide, 65 to 80wt% graphite, and 1 to 10wt% Ketjen black.

In this case, 10 to 34wt% of polyphenylene sulfide, serving as a thermoplastic resin, is included in the separator. Because polyphenylene sulfide has excellent moldability and excellent flexibility, it raises the moldability when the separator is injection-molded, and a separator having a good sealing characteristic is obtained. By this means it is possible to raise further the productivity and accuracy of the separator. Also, because polyphenylene sulfide is a resin that has good heat-resistance, including the polyphenylene sulfide in the separator raises the heat-resistance of the separator. Consequently, it becomes possible to apply the separator to fuel cells used at relatively high temperatures, and the range of applications can be enlarged.

The reasons for setting the polyphenylene sulfide content to 10 to 34wt% are as follows. That is, when the polyphenylene sulfide content is less than 10wt%, the polyphenylene sulfide content is too low and it becomes difficult to secure moldability of the separator and elasticity of the separator, i.e. sealing characteristic. Also, when the content is less than 10wt%, it is difficult to secure heat-resistance of the separator and to make it work as a bonding agent. When on the other hand the polyphenylene sulfide content exceeds 34wt%, the graphite content in the separator is too small and it is difficult to secure adequate electrical conductivity of the separator. Accordingly, the polyphenylene sulfide content was set to 10 to 34wt% to secure moldability, sealing characteristic and heat-resistance of the separator and to secure a sufficient electrical conductivity.

Also, by including 65 to 80wt% of graphite in the separator, its electrical conductivity was raised.

The reasons for setting the graphite content to 65 to 80wt% are as follows. That is, when the graphite content is less than 65wt%, it is difficult to raise the electrical conductivity of the separator because the graphite content is too small. When on the other hand the graphite content exceeds 80wt%, the graphite content is too large and it becomes difficult to disperse the graphite uniformly and the extrusion-molding and press-forming become problematic. Accordingly, the graphite content was set to 65 to 80wt%, to secure electrical conductivity of the separator and to secure moldability. And, by making the graphite content over 65wt%, it is possible to reduce the volume resistivity of the separator and raise the electrical conductivity of the separator amply. Furthermore, by including 1 to 10wt% of Ketjen black, it is possible to raise the electrical conductivity still further.

Ketjen black is a material having particularly good conductivity compared to other carbon blacks, and by including Ketjen black in the separator it is possible to make the electrical conductivity of the separator higher.

The reasons for setting the Ketjen black content to 1 to 10wt% are as follows. That is, when the Ketjen black content is less than 1wt%, the Ketjen black content is too low, and there is a risk of not being possible to secure conductivity of the separator adequately. On the other hand, when the Ketjen black content exceeds 10wt%, kneading becomes difficult because the Ketjen black content is too large. Although it is conceivable to make kneading possible by adding a solvent, there is a risk of costs increasing as a result of using a solvent. Furthermore, even if a solvent is added for kneading, the fluidity of the knead including the Ketjen black is relatively poor and for example at the time of molding it is difficult to obtain the predetermined shape. Accordingly, the Ketjen black content was made 1 to 10wt%, and the electrical conductivity was thereby raised still further.

The graphite and Ketjen black included in the separator are carbon particles, and no large quantity of fibrous material is included in the separator. Therefore, the occurrence of directionality in the separator caused by fibrous material is suppressed, and warping and distortion arising in the separator as a result of anisotropy is prevented. Also, because no large quantity of fibrous material is included in the separator, the strength of the separator is prevented from falling due to weld lines arising in the gas passage grooves and the cooling water passage grooves provided on the separator.

In a preferable form of the invention, the above-mentioned mixture includes 5 to 15wt% of chopped carbon fiber, and the graphite included in this mixture is made 60 to 80wt%.

By 5 to 15wt% of chopped carbon fiber being included in the separator, the strength and the heat-resistance of the separator are raised. When chopped carbon fiber is included, because this performs some of the function of the graphite, the lower limit value of the graphite content can be 60wt%.

The reasons for setting the chopped carbon fiber content to 5 to 15wt% are as follows. That is, when the chopped carbon fiber content is less than 5wt%, the chopped carbon fiber content is too small and it is difficult to secure strength and heat-resistance of the separator. On the other hand, when the chopped carbon fiber content exceeds 15wt%, the amount of the chopped carbon fiber included in the separator is too large and the directionality of the chopped carbon fiber manifests conspicuously and the separator becomes anisotropic. Consequently, there is a risk of warping and distortion arising in the separator. And, when as in a separator there are gas passage grooves and cooling water passage grooves in the side faces, weld lines tend to appear. Consequently, there is a risk of the strength of the separator falling drastically. Accordingly, the chopped carbon fiber content was set to 5 to 15wt%.

Preferably, the viscosity of the polyphenylene sulfide is 20 to 80psi.

By making the viscosity of the polyphenylene sulfide 20 to 80psi, it is possible to knead the graphite into the polyphenylene sulfide well and raise the moldability of the separator further.

The reasons for setting the viscosity of the polyphenylene sulfide to 20 to 80psi are as follows. That is, when the viscosity of the polyphenylene sulfide is less than 20psi, the viscosity is too low and the polyphenylene sulfide does not harden and forms a slurry. On the other hand, when the viscosity of the polyphenylene sulfide exceeds 80psi, the viscosity of the polyphenylene sulfide is too high and the graphite and so on cannot be kneaded well into the polyphenylene sulfide. Accordingly, the viscosity of the polyphenylene sulfide was set to 20 to 80psi, whereby it is made possible to knead the graphite and so on into the polyphenylene sulfide well and the moldability of the separator is raised further.

Brief Description of the Drawings

Fig. 1 is an exploded perspective view showing a fuel cell with fuel cell separators according to a first embodiment of the invention;
Fig. 2 is a sectional view on the line A-A in Fig. 1;
Fig. 3 is a sectional view on the line B-B in Fig. 1;
Fig. 4 is a sectional view of a fuel cell separator shown in Fig. 1;
Fig. 5 is a flow chart of a method for manufacturing a fuel cell separator according to the first embodiment of the invention;
Fig. 6A and Fig. 6B are views illustrating a step of forming a mixture into pellets in the manufacturing method;
Fig. 7 is a view illustrating a pressing step in the manufacturing method;
Fig. 8 is an exploded perspective view showing a fuel cell with fuel cell separators according to a second embodiment of the invention;
Fig. 9 is a sectional view on the line C-C in Fig. 8;
Fig. 10 is a sectional view on the line D-D in Fig. 8;

Fig. 11 is a sectional view of a fuel cell separator shown in Fig. 8;
Fig. 12 is a view illustrating a method of obtaining a volume resistivity;
Fig. 13 is a graph showing a relationship between graphite content and volume resistivity;
Fig. 14 is a graph showing a relationship between Ketjen black content and volume resistivity; and
Fig. 15 is an exploded perspective view showing a fuel cell of related art.

Best Modes for Carrying Out the Invention

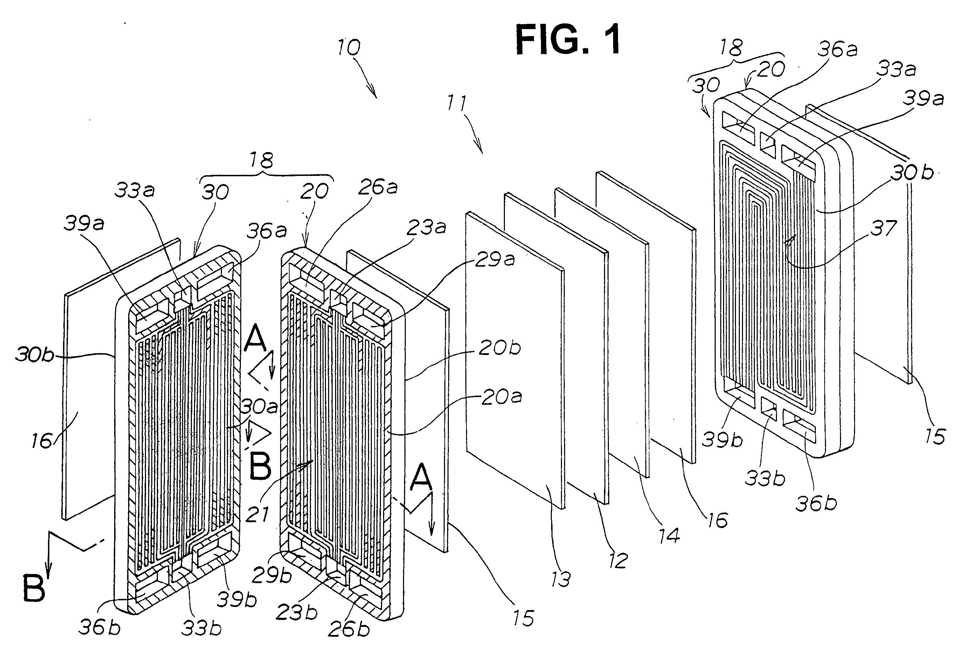

As shown in Fig. 1, a fuel cell 10 is a solid polymer type fuel cell made by constructing cell modules 11 by using for example a solid polymer electrolyte as an electrolyte film 12, appending an anode 13 and a cathode 14 to this electrolyte film 12, disposing a separator 18 on the anode 13 side via an anode diffusion layer 15 and disposing a separator (fuel cell separator) 18 on the cathode 14 via a cathode diffusion layer 16, and stacking many of these cell modules 11 together.

The separator 18 is made up of a first separator 20 and a second separator 30, and has a cooling water passage formation face 20a of the first separator 20 and a bonding face 30a of the second separator 30 bonded together by for example vibration welding.

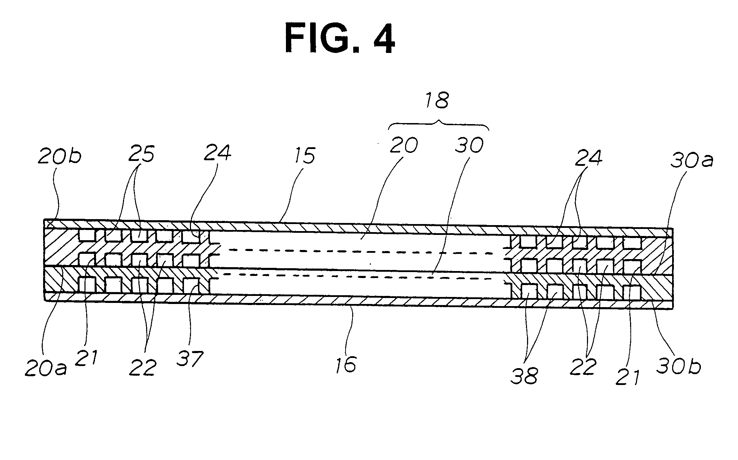

By the first and second separators 20, 30 being vibration-welded together like this, cooling water passage grooves 21... in the first separator 20 are covered by the second separator 30 and form cooling water passages 22... (see Fig. 4).

Cooling water supply openings 23a, 33a in the centers of the top ends of the first and second separators 20, 30 and cooling water discharge openings 23b, 33b in the centers of the bottom ends of the first and second separators 20, 30 connect with these cooling water passages 22....

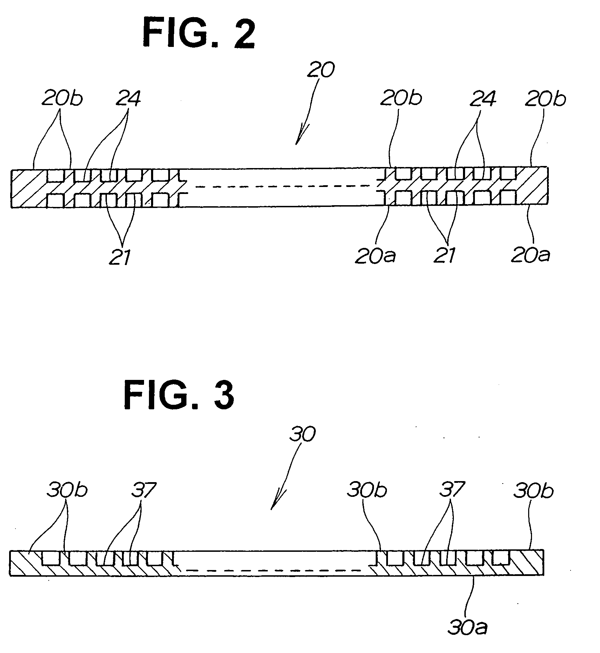

The first separator 20 has fuel gas passage grooves 24... (see Fig. 2) on a fuel gas passage formation face (contact face) 20b, and by the anode diffusion layer 15 being placed on the fuel gas passage formation face 20b the anode diffusion layer 15 covers the fuel gas passage grooves 24... and forms fuel gas passages 25... (see Fig. 4).

Fuel gas supply openings 26a, 36a in the left sides of the top ends of the first and second separators 20, 30 and fuel gas discharge openings 26b, 36b in the right sides of the bottom ends of the first and second separators 20, 30 are connected to these fuel gas passages 25....

The second separator 30 has oxidant gas passage grooves 37 ... in an oxidant gas passage formation face (contact face) 30b, and by the cathode diffusion layer 16 being placed on the oxidant gas passage formation face 30b the cathode diffusion layer 16 covers the oxidant gas passage grooves 37... and forms oxidant gas passages 38... (see Fig. 4).

Oxidant gas supply openings 29a, 39a in the right sides of the top ends of the first and second separators 20, 30 and oxidant gas discharge openings 29b, 39b in the left sides of the bottom ends of the first and second separators 20, 30 are connected to the oxidant gas passages 38....

As the resin for making the first and second separators 20, 30, a mixture made by mixing a thermoplastic resin selected from among ethylene / vinyl acetate copolymers and ethylene / ethyl acrylate copolymers, carbon particles (a carbon material) selected from at least one among Ketjen black, graphite and acetylene black, and glass fibers or carbon fibers is used.

In this mixture, the proportion of the thermoplastic resin is 14 to 20wt%; the proportion of the carbon particles is 80 to 86wt%; and the 80 to 86wt% of carbon particles include 3 to 20wt% of Ketjen black.

Ketjen black is a carbon black having excellent electrical conductivity, and for example one made by Ketjen Black International Co., Ltd. (sold by Mitsubishi Chemical Co., Ltd.) is suitable, although the invention is not limited to this.

Ethylene / ethyl acrylate copolymers and ethylene / ethyl acrylate copolymers are resins having flexibility among thermoplastic resins, and by these resins being used the first and second separators 20, 30 are made very flexible members.

Ketjen black, graphite and acetylene black are materials having excellent electrical conductivity, and by carbon particles selected from at least one among Ketjen black, graphite and acetylene black being used the first and second separators 20, 30 are made members having excellent electrical conductivity.

The reasons for setting the proportion of the thermoplastic resin to 14 to 20wt% are as follows.

When the thermoplastic resin content is less than 14wt%, the thermoplastic resin content is too small and it is difficult to secure flexibility, i.e. elasticity, of the contact faces of the first and second separators 20, 30.

On the other hand, when the thermoplastic resin content exceeds 20wt%, the thermoplastic resin content is too large and it is difficult to maintain the required volume resistivity ($\Omega$.cm), and it becomes problematic to secure adequate electrical conductivity of the first and second separators 20, 30.

Accordingly, the thermoplastic resin content is set to 14 to 20wt%, whereby elasticity of the first and second separators 20, 30 is secured and a sufficient electrical conductivity is secured.

The reasons for setting the carbon particle content to 80 to 86wt% are as follows.

When the carbon particle content exceeds 86wt%, the carbon particle content is too large and it is difficult to disperse the carbon particles uniformly, and extrusion-molding and press-forming become problematic. Therefore, the carbon particle content should be set to 86wt% or lower.

And by the carbon particle content being kept 70wt% and above, the volume resistivity ($\Omega$.cm) of the first and second separators 20, 30 is reduced and the electrical conductivity of the first and second separators 20, 30 is sufficiently raised. Because of this, the carbon particle content should be kept to 70wt% or greater.

However, because 14 to 20wt% of the thermoplastic resin is included in the first and second separators 20, 30, in the first embodiment, the carbon particle content is made 80wt% or more, to secure an ample electrical conductivity of the first and second separators 20, 30.

Ketjen black is a carbon particle with superior electrical conductivity compared to ordinary carbon black. Because of this, by Ketjen black being used, the volume resistivity ($\Omega$.cm) of the first and second separators 20, 30 is greatly reduced. The included amount of this Ketjen black is set to 3 to 20wt%.

The reasons for setting the Ketjen black content to 3 to 20wt% are as follows.

When the Ketjen black content is less than 3wt%, the Ketjen black content is too small and it is difficult to obtain an effect of having included Ketjen black. Consequently, when the Ketjen black content is less than 3wt%, there is a risk of not being possible to secure electrical conductivity of the separator adequately.

If on the other hand the Ketjen black content exceeds 20wt%, kneading becomes difficult because the Ketjen black content is too large. Although it is conceivable to make kneading possible by adding a solvent, there is a risk of costs increasing as a result of using a solvent.

Furthermore, even if a solvent is added and kneading is completed successfully, the fluidity of the knead including the Ketjen black is poor and for example at the time of molding it is difficult to obtain the predetermined shape.

Accordingly, the Ketjen black content was set to 3 to 20wt%, whereby adequate electrical conductivity of the separator is secured and also facilitation of kneading is achieved and good moldability is secured.

Next, referring to Fig. 2, the first separator 20 is a member formed in a substantially rectangular shape (see Fig. 1), and has many cooling water passage grooves 21... in a cooling water passage formation face 20a and has many fuel gas passage grooves 24... in a fuel gas passage formation face (contact face) 20b.

A thermoplastic resin selected from among ethylene / vinyl acetate copolymers and ethylene / ethyl acrylate copolymers is included in the first separator 20. Ethylene / vinyl acetate copolymers and ethylene / ethyl acrylate copolymers are thermoplastic resins having particularly good flexibility.

Therefore, by either of these very flexible thermoplastic resins being included in the first separator 20, the fuel gas passage formation face 20b is given elasticity.

Also, as a result of just including a thermoplastic resin selected from among ethylene / vinyl acetate copolymers and ethylene / ethyl acrylate copolymers in the first separator 20, the fuel gas passage formation face 20b is changed into a part having a good sealing characteristic. By this means it is possible to produce a well-sealing first separator 20 with good efficiency.

As shown in Fig. 3, the second separator 30 is a member formed in a substantially rectangular shape as shown in Fig. 1, and has a bonding face 30a formed flat and has many oxidant gas passage grooves 37... in an oxidant gas passage formation face (contact face) 30b.

A thermoplastic resin selected from among ethylene / vinyl acetate copolymers and ethylene / ethyl acrylate copolymers is included in the second separator 30. Ethylene / vinyl acetate copolymers and ethylene / ethyl acrylate copolymers are thermoplastic resins having particularly good flexibility.

Therefore, by either of these very flexible thermoplastic resins being included in the second separator 30, the oxidant gas passage formation face 30b is given elasticity.

Also, as a result of just including a thermoplastic resin selected from among ethylene / vinyl acetate copolymers and ethylene / ethyl acrylate copolymers in the second separator 30, the oxidant gas passage formation face 30b is changed into a part having a good sealing characteristic. By this means it is possible to produce a well-sealing second separator 30 with good efficiency.

Reference will now be made to Fig. 4, which shows the electrode diffusion layers 15, 16 stacked with the separator 18.

The separator 18 is made by bringing together the first and second separators 20, 30 and then applying a welding pressure to the first and second separators 20, 30 and vibrating one or the other of the first and second separators 20, 30 to produce frictional heat, thereby vibration-welding the cooling water passage formation face 20a of the first separator 20 and the bonding face 30a of the second separator 30 together and covering the cooling water passage grooves 21 of the first separator 20 with the second separator 30 and forming cooling water passages 22.

By the anode diffusion layer 15 being brought together with the fuel gas passage formation face 20b, fuel gas passages 25... are formed by the fuel gas passage grooves 24... and the anode diffusion layer 15.

Here, by including a thermoplastic resin having good flexibility in the first separator 20 it is possible to give the fuel gas passage formation face 20b elasticity and make the fuel gas passage formation face 20b a part having a good sealing characteristic.

Consequently, the mating parts of the fuel gas passage formation face 20b and the anode diffusion layer 15 are kept intimate. Therefore, it is not necessary for a sealing material to be applied between the fuel gas passage formation face 20b and the anode diffusion layer 15.

Therefore, the number of parts can be reduced and the time and labor of applying a seal material can be eliminated, and also the contact resistance between the fuel gas passage formation face 20b and the anode diffusion layer 15 can be suppressed and the output of the fuel cell raised.

And, as a result of the cathode diffusion layer 16 being brought together with the oxidant gas passage formation face 30b, by the oxidant gas passage grooves 37... and the cathode diffusion layer 16 the oxidant gas passages 38... are formed.

Here, by including a thermoplastic resin having good flexibility in the second separator 30 it is possible to give the oxidant gas passage formation face 30b elasticity and make the oxidant gas passage formation face 30b a part having a good sealing characteristic.

Consequently, the mating parts of the oxidant gas passage formation face 30b and the cathode diffusion layer 16 are kept intimate. Therefore, it is not necessary for a sealing material to be applied between the oxidant gas passage formation face 30b and the cathode diffusion layer 16.

Therefore, the number of parts can be reduced and the time and labor of applying a seal material can be eliminated, and also the contact resistance between the oxidant gas passage formation face 30b and the cathode diffusion layer 16 can be suppressed and the output of the fuel cell raised.

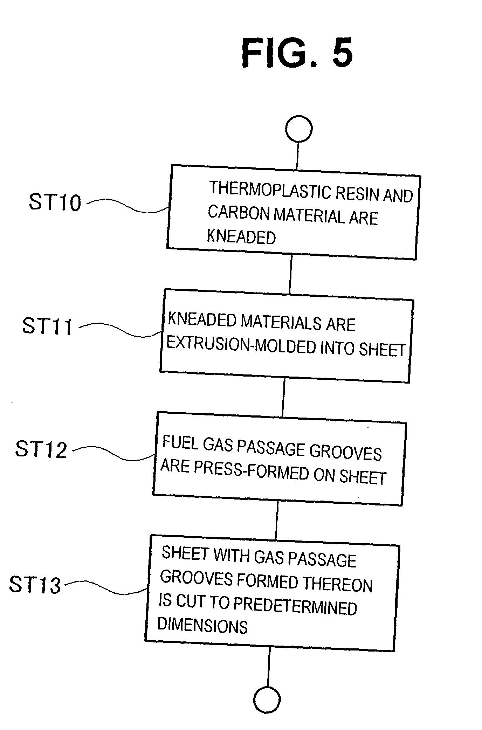

Next, an example of molding the first separator 20 by a fuel cell separator manufacturing method according to the invention will be described, on the basis of Fig. 5 through Fig. 7.

Fig. 5 is a flow chart of a method for manufacturing a fuel cell separator according to the first embodiment of the invention. In the figure, STxx denotes step number.

ST10: A mixture is obtained by kneading together a thermoplastic resin and a conductive material.

ST11: A band-shaped sheet is formed by extrusion-molding the kneaded mixture.

ST12: In one side of this band-shaped sheet, that is, the side corresponding to the cooling water passage formation face, cooling water passage grooves are press-formed, and in the other side of the band-shaped sheet, that is, the side corresponding to the fuel gas passage formation face, fuel gas passage grooves are press-formed, and a separator starting material is thereby obtained.

ST13: By cutting the separator starting material to predetermined dimensions, first separators are obtained.

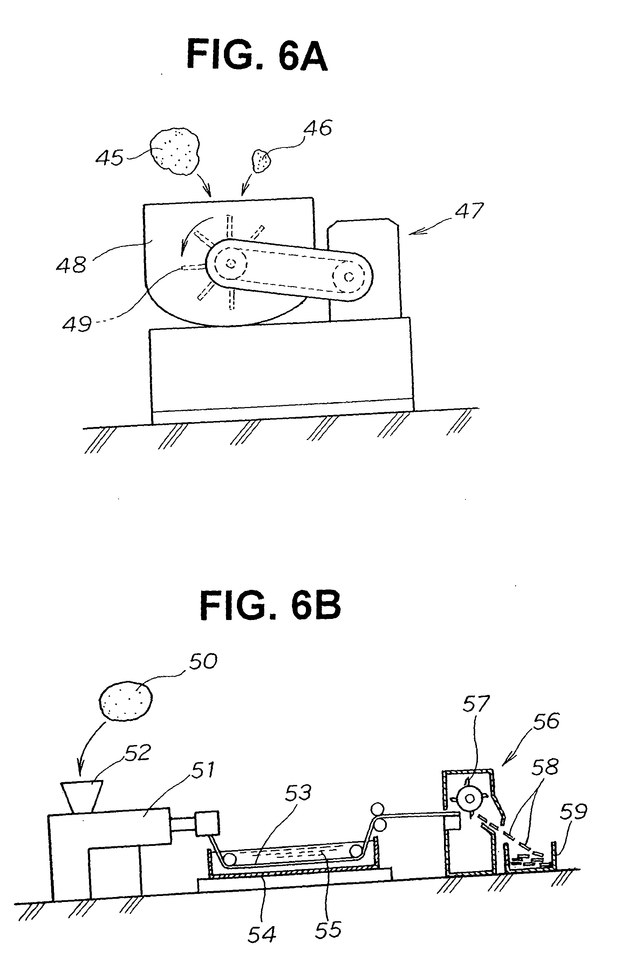

Referring to Fig. 6A through Fig. 8, ST10 to ST13 of this manufacturing method will now be explained in detail.

Fig. 6A and Fig. 6B are views illustrating a step of forming a mixture into pellets in this manufacturing method. Specifically, Fig. 6A shows ST10 and Fig. 6B shows the first half of ST11.

In Fig. 6A, first, a thermoplastic resin 46 selected from ethylene / vinyl acetate copolymers, ethylene / ethyl acrylate copolymers and straight-chain low-density polyethylene is prepared.

Then, a conductive material 45 of at least one type selected from among graphite, Ketjen black, and acetylene black carbon particles is prepared.

The prepared thermoplastic resin 46 and conductive material 45 are fed into a vessel 48 of a kneading machine 47 as shown with arrows. The thermoplastic resin 46 and the conductive material 45 fed in are kneaded inside the vessel 48 by kneading vanes (or a screw) 49 being rotated as shown with an arrow.

In Fig. 6B, the mixture 50 is fed into a hopper 52 of a first extrusion-molding machine 51 and the mixture 50 fed in is extrusion-molded by the first extrusion molding machine 51. By the extrusion-molded molding 53 being passed through a water tank 54, the molding 53 is cooled by water 55 in the water tank 54.

The cooled molding 53 is cut to a predetermined length with a cutter 57 of a cutting machine 56, and the cut pellets 58... are stocked in a stock tray 59.

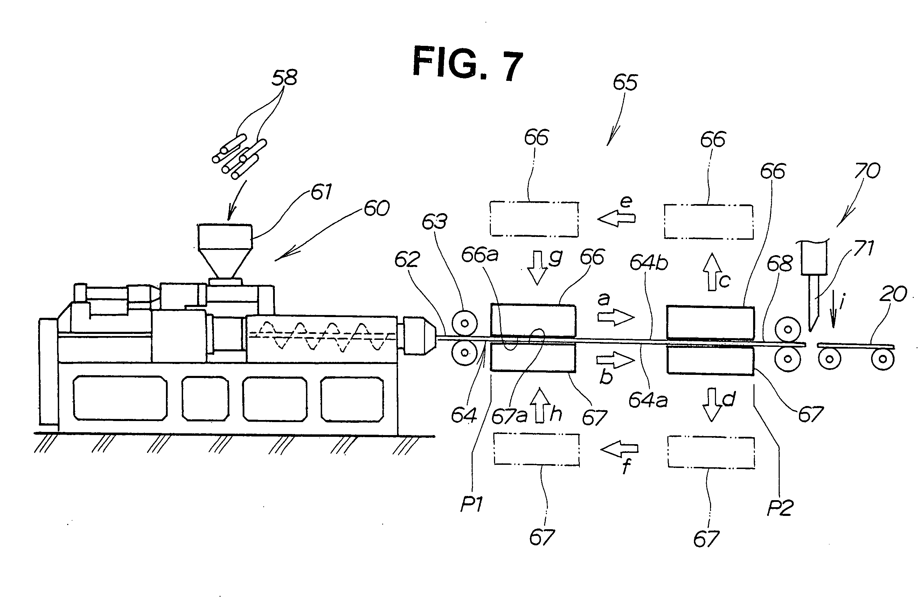

Fig. 7 is a view illustrating a pressing step in the above manufacturing method, and specifically shows the latter half of ST11 to ST13.

The pellets 58... obtained in the previous step are fed into a hopper 61 of a second extrusion-molding machine 60 as shown with an arrow, and the pellets 58 ... are extrusion-molded by the second extrusion-molding machine 60. The extrusion-molded moldings 62 are rolled with rollers 63 to form a band-shaped sheet 64.

A pressing machine 65 is provided on the downstream side of the rollers 63, and this pressing machine 65 has upper and lower press dies 66, 67 above and below the band-shaped sheet 64.

The upper press die 66 has a press face 66a facing a second side 64b of the band-shaped sheet 64, and tongues and grooves (not shown) in this press face 66a. The tongues and grooves in the press face 66a are for press-forming the fuel gas passage grooves 24... (see Fig. 4) in the second side 64b of the band-shaped sheet 64.

The lower press die 67 has a press face 67a facing a first side 64a of the sheet 64, and has tongues and grooves (not shown) in this press face 67a. These tongues and grooves in the press face 67a are for press-forming the cooling water passage grooves 21... (see Fig. 4) in the first side 64a of the band-shaped sheet 64.

The upper and lower press dies 66, 67 are disposed at a press starting position P1, both sides 64a, 64b of the band-shaped sheet 64 are pressed with the upper and lower press dies 66, 67, and with this state being maintained the upper and lower press dies 66, 67 are moved as shown by the arrows a, b at the extrusion speed of the band-shaped sheet 64.

Thus, cooling water passage grooves 21... are press-formed in the first side 64a of the band-shaped sheet 64, i.e. the side corresponding to the cooling water passage formation face 20a (see Fig. 4), and fuel gas passage grooves 24... are press-formed in the second side 64b of the band-shaped sheet 64, i.e. the side corresponding to the fuel gas passage formation face 20b (see Fig. 4), whereby the band-shaped sheet 64 is formed into a separator starting material 68.

When the upper and lower press dies 66, 67 reach a press releasing position P2, the upper and lower press dies 66, 67 move away from the band-shaped sheet 64 as shown by the arrows c and d, and after the upper and lower press dies 66, 67 have reached a predetermined position on the release-side, the upper and lower press dies 66, 67 move toward the upstream side as shown by the arrows e and f.

When the upper and lower press dies 66, 67 have reached a predetermined position on the press start-side, the upper and lower press dies 66, 67 are moved to the press start position P1 as shown by the arrows g and h.

By the steps described above being repeated in turn, the cooling water passage grooves 21... and fuel gas passage grooves 24... are press-formed in the sides 64a, 64b of the band-shaped sheet 64.

In Fig. 7, to facilitate understanding, an example was illustrated wherein one each of the upper and lower press dies 66, 67 were provided; however, in practice a plurality of each of the upper and lower press dies 66, 67 are provided.

By a plurality of each of the upper and lower press dies 66, 67 being provided, cooling water passage grooves 21... and fuel gas passage grooves 24... (see Fig. 4) can be press-formed continuously in the sides 64a, 64b of the band-shaped sheet 64.

The upper and lower press dies 66, 67 have parts for forming the fuel gas supply opening 26a and the fuel gas discharge opening 26b shown in Fig. 1. And, the upper and lower press dies 66, 67 have parts for forming the oxidant gas supply opening 29a and the oxidant gas discharge opening 29b shown in Fig. 1.

Also, the upper and lower press dies 66, 67 have parts for forming the cooling water supply opening 23a and the cooling water discharge opening 23b shown in Fig. 1.

Thus, as well as the cooling water passage grooves 21... and the fuel gas passage grooves 24... being formed in the sides 64a, 64b of the band-shaped sheet 64 with the upper and lower press dies 66 and 67, the cooling water supply opening 23a and the gas supply openings 26a, 29a and the cooling water discharge opening 23b and the gas discharge openings 26b, 29b shown in Fig. 1 are formed at the same time.

A cutter device 70 is provided above the separator starting material 68 obtained in the previous step, on the downstream side of the pressing machine 65.

By a cutter 71 of this cutter device 70 being lowered as shown by the arrow i, the separator starting material 68 is cut to a predetermined dimension and first separators 20... are obtained. This ends the process of manufacturing the first separator 20.

Thus, in this method for manufacturing a fuel cell separator according to the invention, the cooling water passage grooves 21... and the fuel gas passage grooves 24... are press-formed in the sides 64a, 64b of the mixture 50 in the form of a band-shaped sheet 64, and then the sheet 64 is cut to a predetermined dimension to obtain first separators 20.

By the cooling water passage grooves 21... and the fuel gas passage grooves 24... being press-formed in the sheet 64 state, the cooling water passage grooves 21... and the fuel gas passage grooves 24... can be molded continuously with good efficiency and the productivity of the first separator 20 can be raised.

Although an example of forming the first separator 20 has been described in connection with Fig. 5 through Fig. 7, the second separator 30 can also be manufactured by the same method as the manufacturing method of the first separator 20.

However, the second separator 30 does not have the cooling water passage grooves 21... (see Fig. 4) like the first separator 20, and has a flat bonding face 30a. Because of this, the lower press die 67 shown in Fig. 7 does not need to have tongues and grooves for press-forming cooling water passage grooves 21... in the first side of the band-shaped sheet 64 in its face facing the first side of the band-shaped sheet 64.

A variation of the first embodiment will now be described.

Whereas in the first embodiment an example was described wherein the proportion of the thermoplastic resin included in the first and second separators 20, 30 was made 14 to 20wt% and the proportion of the carbon particles was made 80 to 86wt%, as a variation of the first embodiment the proportion of the thermoplastic resin included in the first and second separators 20, 30 can be made 14 to 20wt%, the proportion of the carbon particles made 70 to 83.5wt% and a proportion of glass fibers or carbon fibers made 2.5 to 10wt%.

By glass fibers or carbon fibers being mixed with the mixture, the first and second separators 20, 30 of this variation of the first embodiment can be made more rigid.

Here, the reasons for setting the glass fiber or carbon fiber content to 2.5 to 10wt% are as follows.

When the glass fiber or carbon fiber content is less than 2.5wt%, the glass fiber or carbon fiber content is too small and it is difficult to raise the rigidity of the first and second separators 20, 30.

On the other hand, when the glass fiber or carbon fiber content exceeds 10wt%, the glass fiber or carbon fiber content is too large and it is difficult to disperse the glass fibers or carbon fibers uniformly in the mixture and the extrusion-molding and press-forming of the mixture become problematic.

Accordingly, the glass fiber or carbon fiber content is set to 2.5 to 10wt%, whereby the rigidity of the first and second separators 20, 30 is raised and a mixture having good moldability is obtained.

The reasons for making the carbon particle content 70 to 83.5wt% in this variation of the first embodiment are as follows.

When the carbon particle content is less than 70wt%, the carbon particle content is too small and it is difficult to reduce the volume resistivity ($\Omega$.cm) of the first and second separators 20, 30, and it is difficult to secure an adequate electrical conductivity of the first and second separators 20, 30.

On the other hand, as mentioned above, when the carbon particle content exceeds 86wt%, the carbon particle content is too large and it is difficult to disperse the carbon particles uniformly, and extrusion-molding and press-forming become problematic. Therefore, it is desirable that the carbon particle content be set to 86wt% or below.

However, because 14 to 20wt% of the thermoplastic resin and 2.5 to 10wt% of glass fibers or carbon fibers are included in the first and second separators 20, 30, in this variation, the carbon particle content is made 83.5wt% or below, whereby the carbon particles can be dispersed uniformly and extrusion-molding and press-forming can be carried out well.

When the carbon particle content is set to 70 to 83.5wt% like this, the volume resistivity ($\Omega$.cm) is reduced and a mixture having good moldability is obtained.

With the first and second separators 20, 30 of this variation of the first embodiment, the same effects as those of the first embodiment can be obtained, and in addition, as a result of the glass fibers or carbon fibers being mixed in, the rigidity of the first and second separators 20, 30 is raised.

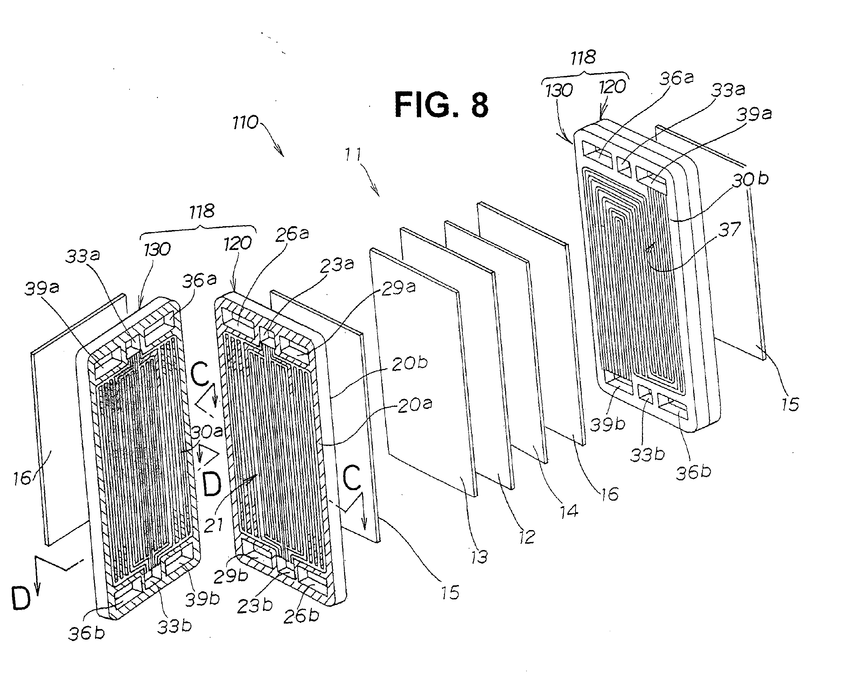

Next, a second embodiment will be described, on the basis of Fig. 8 through Fig. 14. Parts in this second embodiment the same as parts in the first embodiment have been given the same reference numerals and will not be described again.

First, reference will be made to Fig. 1, which is an exploded perspective view of a fuel cell with a fuel cell separator according to the second embodiment of the invention.

Only the separator 118 (a first separator 120 and a second separator 130) of the fuel cell 110 of this second embodiment differs from the fuel cell 10 of the first embodiment, and the rest of its construction is the same as the fuel cell 10 of the first embodiment.

The separator 118 (first separator 120 and second separator 130) will be described below.

The first and second separators 120, 130 are made from a mixture including 10 to 34wt% of polyphenylene sulfide, 60 to 80wt% of graphite, 1 to 10wt% of Ketjen black, and 5 to 15wt% of chopped carbon fiber.

10 to 34wt% of polyphenylene sulfide is included in the first and second separators 120, 130 as a thermoplastic resin. Because polyphenylene sulfide is a resin having superior moldability and superior elasticity, the moldability of when the first and second separators 120, 130 are injection-molded is raised and first and second separators 120, 130 having an excellent sealing characteristic are obtained.

By this means, the productivity and accuracy of the first and second separators 120, 130 are raised further.

Moreover, because polyphenylene sulfide is a resin having excellent heat-resistance, by polyphenylene sulfide being included in the first and second separators 120, 130, the heat-resistance of the first and second separators 120, 130 is raised.

Consequently, application to fuel cells used at relatively high temperatures becomes possible, and the range of uses can be enlarged.

The reasons for setting the polyphenylene sulfide content to 10 to 34wt% are as follows.

When the polyphenylene sulfide content is less than 10wt%, the polyphenylene sulfide content is too low and it becomes difficult to secure moldability of the first and second separators 120, 130 and elasticity of the contact faces of the first and second separators 120, 130, i.e. sealing characteristic.

Also, when the included amount is less than 10wt%, it is difficult to secure heat-resistance of the first and second separators 120, 130 and to make it work as a bonding agent.

When on the other hand the polyphenylene sulfide content exceeds 34wt%, the graphite content in the first and second separators 120, 130 is too small and it is difficult to secure adequate electrical conductivity of the first and second separators 120, 130.

Accordingly, the thermoplastic resin content was set to 10 to 34wt%, whereby moldability, sealing characteristic, heat-resistance and bonding characteristic of the first and second separators 120, 130 are secured and a sufficient electrical conductivity is secured.

Also, by 60 to 80wt% of graphite being included in the first and second separators 120, 130, their electrical conductivity was raised.

The reasons for setting the graphite content to 60 to 80wt% are as follows.

When the graphite content is less than 60wt%, the graphite content is too small and it is difficult to raise the electrical conductivity of the first and second separators 120, 130.

On the other hand, when the graphite content exceeds 80wt%, the graphite content is too large and it is difficult to disperse the graphite uniformly, and extrusion-molding and press-forming become problematic.

Accordingly, the graphite content is set to 60 to 80wt%, whereby electrical conductivity of the first and second separators 120, 130 is secured and moldability is secured.

By the graphite content being made at least 60wt%, the volume resistivity (mΩ.cm) is reduced and the electrical conductivity of the first and second separators 120, 130 is amply raised.

Also, by 1 to 10wt% of Ketjen black being included in the first and second separators 120, 130, the electrical conductivity is raised still further.

Ketj en black is a material with particularly good electrical conductivity compared to other carbon blacks, and by Ketjen black being included in the first and second separators 120, 130 the electrical conductivity of the first and second separators 120, 130 is raised more.

Here the reasons for setting the Ketjen black content to 1 to 10wt% are as follows.

If the Ketjen black content is less than 1wt%, there is a risk of not being possible to secure electrical conductivity of the first and second separators 120, 130 adequately because the Ketjen black content is too small.

If on the other hand the Ketjen black content exceeds 10wt%, kneading becomes difficult because the Ketjen black content is too large. Although it is conceivable to make kneading possible by adding a solvent, there is a risk of costs increasing as a result of using a solvent.

Furthermore, even if a solvent is added and kneading is completed successfully, the fluidity of the knead including the Ketjen black is relatively poor and for example at the time of molding it is difficult to obtain the predetermined shape.

Accordingly, the Ketjen black content was set to 1 to 10wt% to secure adequate electrical conductivity of the first and second separators 120, 130 and also achieve facilitation of kneading and secure good moldability.

The graphite and Ketjen black included in the first and second separators 120, 130 are carbon particles, and no large quantity of fibrous material is included in the separators. Therefore, the occurrence of directionality in the separators caused by fibrous material is suppressed, and warping and distortion arising in the first and second separators 120, 130 as a result of anisotropy is prevented.

Also, because no large quantity of fibrous material is included in the first and second separators 120, 130, the strength of the first and second separators 120, 130 is prevented from falling due to weld lines arising in the gas passage grooves and the cooling water passage grooves provided on the first and second separators 120, 130.

Also, by 5 to 15wt% of chopped carbon fiber being included in the first and second separators 120, 130, the strength and the heat-resistance of the first and second separators 120, 130 are raised.

Here, the reasons for setting the chopped carbon fiber content 5 to 15wt% are as follows.

When the chopped carbon fiber content is less than 5wt%, the chopped carbon fiber content is too small, and it is difficult to secure strength and heat-resistance of the first and second separators 120, 130.

On the other hand, when the chopped carbon fiber content exceeds 15wt%, the amount of the chopped carbon fiber included in the first and second separators 120, 130 is too large and the directionality of the chopped carbon fiber manifests conspicuously and the first and second separators 120, 130 become anisotropic. Consequently, there is a risk of warping and distortion arising in the first and second separators 120, 130.

And, when as in the first and second separators 120, 130 there are gas passage grooves and cooling water passage grooves in the side faces, weld lines tend to appear. Consequently, there is a risk of the strength of the first and second separators 120, 130 falling drastically.

Accordingly, the chopped carbon fiber content was set to 5 to 15wt%, whereby strength and durability of the first and second separators 120, 130 were secured.

Here, the viscosity of the polyphenylene sulfide included in the first and second separators 120, 130 is set to 20 to 80psi.

The reasons for setting the viscosity of the polyphenylene sulfide to 20 to 80psi are as follows.

When the viscosity of the polyphenylene sulfide is less than 20psi, the viscosity is too low and in the manufacturing of the first and second separators 120, 130 the polyphenylene sulfide does not harden and forms a slurry.

On the other hand, when the viscosity of the polyphenylene sulfide exceeds 80psi, the viscosity of the polyphenylene sulfide is too high and in the manufacturing of the first and second separators 120, 130 the graphite and so on cannot be kneaded well into the polyphenylene sulfide.

Accordingly, the viscosity of the polyphenylene sulfide is set to 20 to 80psi, whereby it is made possible to knead the graphite and so on into the polyphenylene sulfide well and the moldability of the separator is raised further.

The viscosity of the polyphenylene sulfide is that measured by the MFR (Melt Flow Rate) test method at 300°C (ASTM D1238).

MFR is a method wherein a vertical metal cylinder is filled with polyphenylene sulfide, this polyphenylene sulfide is pressed with a piston loaded with a weight and extruded through a die at the end of the cylinder, and the movement time taken for the piston to move a predetermined distance at this time is measured and the viscosity obtained on the basis of this measured value.

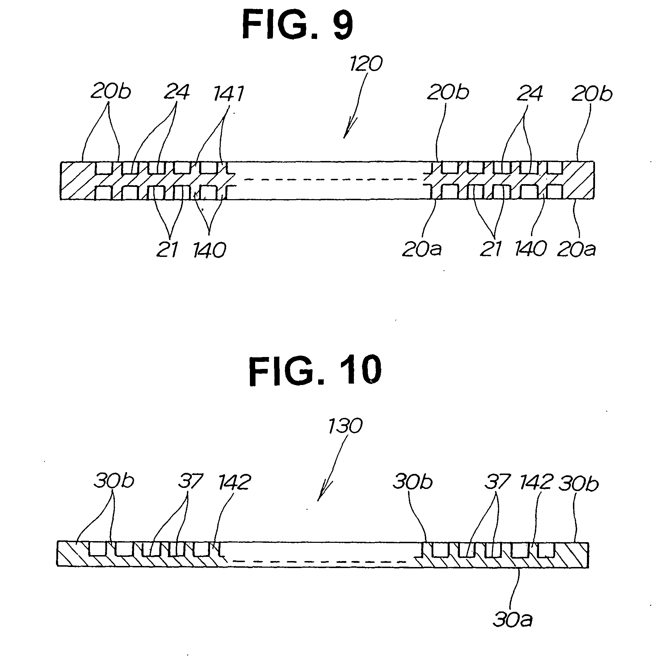

Next, referring to Fig. 9, the first separator 120 is a member formed in a substantially rectangular shape (see Fig. 8), and has many cooling water passage grooves 21... in a cooling water passage formation face 20a and has many fuel gas passage grooves 24... in a fuel gas passage formation face 20b.

10 to 34wt% of polyphenylene sulfide is included in the first separator 120. By this means, moldability, sealing characteristic, heat-resistance and bonding characteristic of the first separator 120 are secured, and an ample electrical conductivity is secured.

Because the elastic modulus of the chopped carbon fiber included in the first separator 120 is high, when the chopped carbon fiber content is too large, chopped carbon fiber cannot get into the ribs 140... forming the cooling water passage grooves 21... or into the ribs 141... forming the fuel gas passage grooves 24..., and separation of the chopped carbon fiber and the polyphenylene sulfide tends to occur.

Consequently, there is a risk of the ribs 140..., 141... having a higher polyphenylene sulfide content compared to other parts, and not being able to exhibit their proper performance.

Accordingly, the chopped carbon fiber content was made 5 to 15wt%. In this way, the chopped carbon fiber is made to enter into the ribs 140..., 141... well and the ribs 140..., 141... are formed well.

As shown in Fig. 10, the second separator 130 is a member formed in a substantially rectangular shape as shown in Fig. 8, and has a bonding face 30a formed flat and has many oxidant gas passage grooves 37... in an oxidant gas passage formation face (contact face) 30b.

10 to 34wt% of polyphenylene sulfide is included in the second separator 130. By this means, moldability, sealing characteristic, heat-resistance and bonding characteristic of the second separator 130 are secured, and an ample electrical conductivity is secured.

Like the first separator 120, in the second separator 130 also, because the chopped carbon fiber content is kept to 5 to 15wt%, the chopped carbon fiber is made to enter into the ribs 142... well and the ribs 142... are formed well.

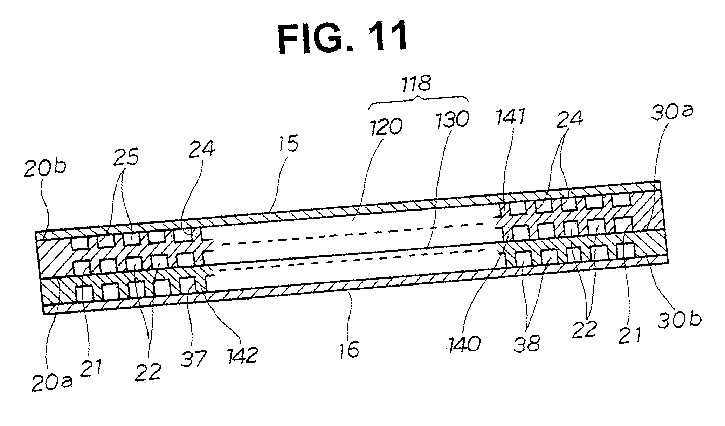

Next, reference will be made to Fig. 11, which shows the electrode diffusion layers 15, 16 stacked with the separator 118.

The separator 118 is made by bonding together the cooling water passage formation face 20a of the first separator 120 and the bonding face 30a of the second separator 130 and covering the cooling water passage grooves 21 in the first separator 120 with the second separator 130 to form cooling water passages 22.

By the anode diffusion layer 15 being set against the fuel gas passage formation face 20b, fuel gas passages 25... are formed by the fuel gas passage grooves 24... and the anode diffusion layer 15.

Because 5 to 15wt% of chopped carbon fiber is included in this separator 118, its strength, elastic modulus and heat-resistance are raised further. By the strength of the separator 118 being raised, the tightening strength of when the separator 118 is assembled to the fuel cell is raised.

Also, by the elastic modulus and the heat-resistance of the separator 118 being raised, resistance to gas pressure and creep strength at high temperatures are raised, and it becomes possible for the fuel cell to be used suitably even at high temperatures.

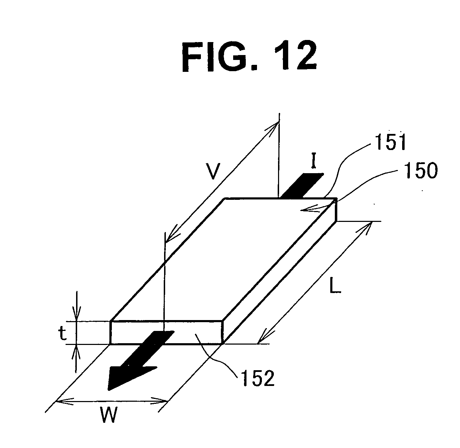

Next, in Fig. 12, it will be explained how the volume resistivity $\rho$v is obtained. First, an example of obtaining the volume resistivity $\rho$v of a sample 150 (width W, height t, length L) by the four probe method (ASTM D991) will be described.

A fixed current I is passed as shown with an arrow from a first end 151 of cross-sectional area (W×t) to a second end 152, and the potential difference V between an electrode on the first end 151 side and an electrode on the second end 152 side, which are separated by the distance L, is measured by the four probe method.

On the basis of the measured potential difference V, the volume resistivity $\rho$v is obtained using the following equation.

$$\text{Volume Resistivity } \rho v = (V/I) \times (W/L) \times t$$

The reasons for employing the four probe method will be explained.

In the measurement of the potential difference V, when the fixed current I is passed through the sample 150, a voltage drop called contact resistance occurs as a result of an interface phenomenon between the first end 151 of the sample 150 and the current electrode. Due to the influence of this contact resistance, the resistance $\Omega$ (V/I) measures high.

To avoid this, by using the four probe method, contact resistance is eliminated and the true volume resistivity pv of the sample 150 is obtained.

As the method of measuring the potential difference V, besides the four probe method, the double ring method (ASTM D257) is also known.

However, the double ring method is suited to the measurement of high resistances, and even in measurement results obtained by the present inventors it was found that compared with the four probe method the volume resistivity measures considerably low.

Volume resistivities obtained by the four probe method (ASTM D991) and the double ring method (ASTM D257) will be discussed below on the basis of Test Examples 1 and 2 of Table 1.

Table 1

| | | | Density | Test Example 1 | Test Example 2 |
|---|---|---|---|---|---|
| Blend composition | polyphenylene sulfide | viscosity 60psi | 1.35 | 15wt% | 12.5wt% |
| | | viscosity 20psi | 1.35 | 15wt% | 12.5wt% |
| | plasticizer (polymer type) | | 0.95 | - | 2.5wt% |
| | graphite | | 2.3 | 69wt% | 69wt% |
| | Ketjen black | | 1.8 | 1wt% | 1wt% |
| | chopped carbon fiber (PAN) | | 1.75 | - | 2.5wt% |
| fluidity of blend composition (spiral flow ratio) | | | | 30 | 45 |
| Volume Resistivity | four probe method (ASTM D991) | | | 0.57mΩ/cm | 0.33mΩ/cm |
| | double ring method (ASTM D257) | | | 0.155mΩ/cm | 0.072mΩ/cm |

EP 1 553 651 A1

As shown in Table 1, the test piece of Test Example 1 included 15wt% polyphenylene sulfide (viscosity 60psi), 15wt% polyphenylene sulfide (viscosity 20psi), 69wt% graphite (particle diameter 100μm), and 1wt% Ketjen black.

The viscosity of this mixture is spiral flow ratio 30.

The test piece of Test Example 2 included 12.5wt% polyphenylene sulfide (viscosity 60psi), 12.5wt% polyphenylene sulfide (viscosity 20psi), 2.5wt% plasticizer (polymer type), 69wt% graphite (particle diameter 100μm), 1wt% Ketjen black and 2.5wt% PAN chopped carbon fiber.

The viscosity of this mixture is spiral flow ratio 45.

A spiral flow ratio is a ratio obtained in a spiral flow test. A spiral flow test is a test wherein molten resin is injected by means of an injection-molding machine into a narrow and long spiral-shaped groove formed in a die and its moldability is determined from the flow length of the molten resin flowing into the spiral-shaped groove.

The volume resistivities of the test piece of Test Example 1 and the test piece of Test Example 2 were obtained by the four probe method and by the double ring method.

The volume resistivities obtained by the double ring method were Test Example 1: 0.155mΩ.cm and Test Example 2: 0.072mΩ.cm .

The volume resistivities obtained by the four probe method, on the other hand, where Test Example 1: 0.57mΩ. cm and Test Example 2: 0.33mΩ.cm.

Thus was found that when a volume resistivity in a low resistance range is measured by the double ring method, which is suited to high resistance ranges, the volume resistivity becomes considerably low compared to the four probe method. So, to raise reliability, it was decided that volume resistivities would be measured by the four probe method.

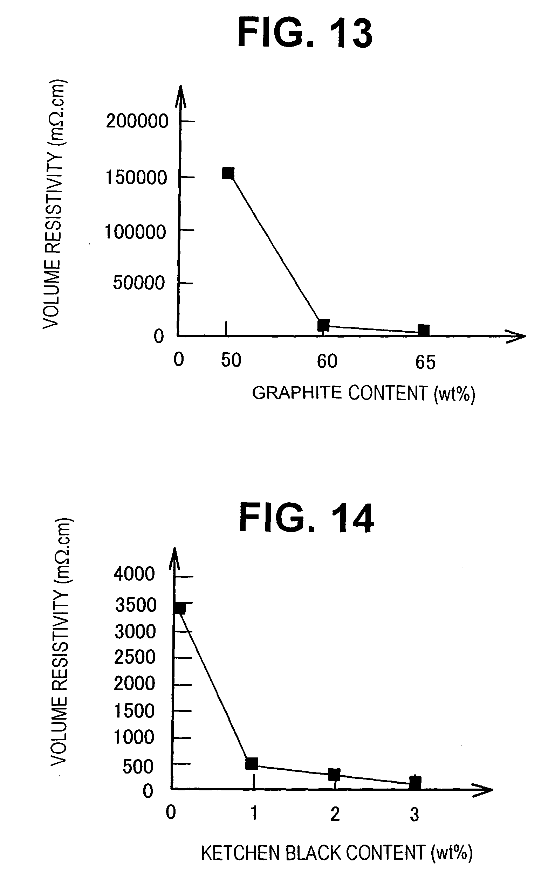

Next, relationships between volume resistivity and graphite and Ketjen black contents obtained by the four probe method will be discussed, with reference to Figs. 13 and 14.

In the graph of Fig. 13, the vertical axis shows volume resistivity (mΩ.cm) and the horizontal axis shows graphite content (wt%).

It can be seen that when the graphite content is 0, the volume resistivity is about 150000mΩ.cm, but when the graphite content is 60wt% or more, the volume resistivity is low.

Therefore, the graphite content was set to at least 60wt%, and preferably at least 65wt%.

In the graph of Fig. 14, the vertical axis shows volume resistivity (mΩ.cm) and the horizontal axis shows Ketjen black content (wt%).

When the Ketjen black content is 0, the volume resistivity is about 3400mΩ.cm, but when the Ketjen black content reaches 1wt% the volume resistivity is down to about 500mΩ.cm.

Also, it can be seen that when the Ketjen black content is 2, the volume resistivity is about 300mΩ.cm, and when the Ketjen black content reaches 3wt% the volume resistivity is extremely small.

Therefore, the Ketjen black content was set to be at least 1wt%.

Next, Test Examples 1 to 3 and Comparison Examples 1 and 2 will be discussed on the basis of Table 2.

For the polyphenylene sulfide included in the separator 118, as an example that manufactured by Idemitsu Petrochemical Co., Ltd. was used, and for the graphite as an example that manufactured by Nippon Graphite Industries, Ltd. was used.

For the Ketjen black, as an example EC600JD (trade name) made by Ketj en Black International Co., Ltd (sold by Mitsubishi Chemical Co., Ltd.) was used, and for the chopped carbon fiber, as an example a PAN type made by Toray Industries, Inc. was used.

EC600JD (trade name) made by Ketjen Black International Co., Ltd is a high-grade, highly conductive carbon black that provides the same electrical conductivity as an ordinary Ketj en black with only about 60% of the content.

The chopped carbon fiber made by Toray Industries, Inc. is a carbon fiber of diameter d 7μm and length 3mm.

Table 2

| | | Test Ex. 1 | Test Ex. 2 | Test Ex. 3 | Comparison Ex. 1 | Comparison Ex. 2 |
|---|---|---|---|---|---|---|
| Blend composition | polyphenylene sulfide | 33.25wt% (viscosity 45psi) | 30wt% (viscosity 45psi) | 25wt% (viscosity 45psi) | 35wt% (viscosity 80psi) | 35wt% (viscosity 80psi) |
| | graphite | 60wt% (particle 100μm) | 63wt% (particle 100μm) | 67wt% (particle 100μm) | 58wt% (particle 100μm) | 62wt% (particle 100μm) |
| | Ketjen black | 2.85wt% (EC600JD) | 2wt% (EC600JD) | 3wt% (EC600JD) | 2wt% (EC600JD) | 3wt% (EC600JD) |
| | chopped carbon fiber | 5wt% (PAN) | 5wt% (PAN) | 5wt% (PAN) | 5wt% (PAN) | - |
| fluidity of blend composition (spiral flow ratio) | | 40 | 45 | 60 | 62 | 50 |
| volume resistivity | | 72mΩ.cm | 85mΩ.cm | 60mΩ.cm | 330mΩ.cm | 98mΩ.cm |
| verdict | | O | O | O | X | X |

- polyphenylene sulfide    : Idemitsu Petrochemical Co., Ltd.
- graphite                 : Nippon Graphite Industries, Ltd.
- Ketjen black             : Ketjen Black International Co., Ltd.
- chopped carbon fiber     : Toray Industries, Inc.

EP 1 553 651 A1

As shown in Table 2, Test Example 1 includes 33.25wt% of polyphenylene sulfide (viscosity 45psi), 60wt% of graphite (particle diameter 100µm), 2.85wt% of Ketjen black, and 5wt % of chopped carbon fiber. The viscosity of this mixture is spiral flow ratio 40.

Test Example 2 includes 30wt% of polyphenylene sulfide (viscosity 45psi), 63wt% of graphite (particle diameter 100µm), 2wt% of Ketjen black, and 5wt% of chopped carbon fiber. The viscosity of this mixture is spiral flow ratio 45.

Test Example 3 includes 25wt% of polyphenylene sulfide (viscosity 45psi), 67wt% of graphite (particle diameter 100µm), 3wt% of Ketjen black, and 5wt% of chopped carbon fiber. The viscosity of this mixture is spiral flow ratio 60.

Comparison Example 1 includes 35wt% of polyphenylene sulfide (viscosity 80psi), 58wt% of graphite (particle diameter 100µm), 2wt% of Ketjen black, and 5wt% of chopped carbon fiber. The viscosity of this mixture is spiral flow ratio 62.

Comparison Example 2 includes 35wt% of polyphenylene sulfide (viscosity 80psi), 62wt% of graphite (particle diameter 100µm), and 3wt% of Ketjen black. The viscosity of this mixture is spiral flow ratio 50.

Samples of Test Examples 1 to 3 and Comparison Examples 1 and 2 were prepared, and then the volume resistivities of the samples were obtained by the four probe method explained with reference to Fig. 12.

Here, from the expectation that if the volume resistivity is 90mΩ.cm or less the mixture will provide a sufficient electrical conductivity when used in the separator 18 (see Fig. 1), a volume resistivity threshold value was made 90mΩ.cm, and when the volume resistivity obtained was 90mΩ.cm or lower an evaluation of OK was made and when the volume resistivity obtained was above 90mΩ.cm an evaluation of X was made.

The results were that Test Example 1 had its volume resistivity kept to 72mΩ.cm, which is below 90mΩ.cm and therefore the evaluation was OK.

Test Example 2 had its volume resistivity kept to 85mΩ.cm, which is below 90mΩ.cm and therefore the evaluation was OK.

And Test Example 3 had its volume resistivity kept to 60mΩ.cm, which is below 90mΩ.cm and therefore the evaluation was OK.

On the other hand, Comparison Example 1 had a volume resistivity of 330mΩ.cm, which is over 90mΩ.cm and so the evaluation was X.

And Comparison Example 2 had a volume resistivity of 98mΩ.cm, which is over 90mΩ.cm and so the evaluation was X.

As for the fluidity of the mixture, considering moldability and so on, it must be at least 30 by spiral flow ratio, and preferably should be at least 40.

In the cases of Test Example 1 to Test Example 3 and Comparison Example 1 and Comparison Example 2, because the fluidities of the mixtures were all above 40 by spiral flow ratio, for example injection-molding was possible.

Next, a variation of the second embodiment will be described.

Although in the second embodiment an example was described wherein 10 to 34wt% of polyphenylene sulfide, 60 to 80wt% of graphite, 1 to 10wt% of Ketjen black and 5 to 15wt% of chopped carbon fiber were included in the first and second separators 120, 130, as a variation of the second embodiment it is possible to include 10 to 34wt% of polyphenylene sulfide, 65 to 80wt% of graphite, and 1 to 10wt% of Ketjen black in the first and second separators 120, 130.

With this variation of the second embodiment, by 10 to 34wt% polyphenylene sulfide being included in the first and second separators 120, 130, the moldability of the first and second separators 120, 130 when they are injection-molded is raised, and first and second separators 120, 130 having an excellent sealing characteristic are obtained.

As a result, the productivity and the accuracy of the first and second separators 120, 130 are raised further.

Also, because polyphenylene sulfide is a resin having good heat-resistance, by polyphenylene sulfide being included in the first and second separators 120, 130, the heat-resistance of the first and second separators 120, 130 is raised. Consequently, application to fuel cells used at relatively high temperatures becomes possible, and the range of uses can be enlarged.

The reasons for setting the polyphenylene sulfide content to 10 to 34wt% in this variation of the second embodiment are the same as in the second embodiment.

By 65 to 80wt% of graphite being included in the first and second separators 120, 130, the electrical conductivity is raised.

The reasons for setting the graphite content to 65 to 80wt% are the same as in the second embodiment.

That is, when the graphite content is less than 65wt%, it is difficult to raise the electrical conductivity of the first and second separators 120, 130 because the graphite content is too small.

When on the other hand the graphite content exceeds 80wt%, the graphite content is too large and it becomes difficult to disperse the graphite uniformly, and the extrusion-molding and press-forming become problematic.

Accordingly, the thermoplastic resin content was set to 65 to 80wt%, whereby electrical conductivity of the first and second separators 120, 130 is secured and moldability is secured.

By making the graphite content over 65wt%, it is possible to reduce the volume resistivity (mΩ.cm) of the first and second separators 120, 130 and raise the electrical conductivity of the first and second separators 120, 130 amply.

Furthermore, by including 1 to 10wt% of Ketjen black in the separators, it is possible to raise the electrical conductivity still further.

The reasons for setting the Ketjen black content to 1 to 10wt% in the variation of the second embodiment are the same as in the second embodiment.

With the first and second separators 120, 130 of this variation of the second embodiment, the same effects as those of the second embodiment can be obtained.

Although in the foregoing first and second embodiments solid polymer fuel cells 10, 110 in which solid polymer electrolyte films were used as the electrolyte film 12 were described, the invention is not limited to this, and can also be applied to other fuel cells.

Although in the foregoing first and second embodi- ments examples were described wherein the first separators 20, 120 and the second separators 30, 130 were molded continuously by extrusion-molding and press-forming, the invention is not limited to this, and they can alternatively be molded by some other manufacturing method such as thermal pressing, injection-molding or transfer molding.

Transfer molding is a method of molding by putting one shot of a molding material into a pot part other than the cavity and then transferring the molten material into the cavity with a plunger.

Also, whereas in the foregoing first and second embodiments examples were described wherein as an example the Ketjen black 'EC600JD' made by Ketjen Black International Co., Ltd. (sold by Mitsubishi Chemical Co., Ltd.) was used, there is no limitation to this, and for example 'EC' made by Ketjen Black International Co., Ltd. can alternatively be used, or some other Ketjen black can be used.

Another carbon black having excellent electrical conductivity like Ketjen black can be used instead of Ketjen black.

Also, although in the second embodiment an example was described wherein the viscosity of the polyphenylene sulfide included in the first and second separators 120, 130 was set to 20 to 80psi, when the viscosity of the polyphenylene sulfide is higher than 80psi, this can be dealt with by the use of a plasticizer.

Also, although in the foregoing second embodiment an example was described wherein graphite of particle diameter 100μm was used, the particle diameter of the graphite is not limited to 100μm, and some other particle diameter can alternatively be used.

Whereas in the foregoing second embodiment an example was described wherein a PAN chopped carbon fiber was used, there is no limitation to this, and alternatively for example a pitch chopped carbon fiber can be used.

Industrial Applicability

As described above, with the present invention it is possible to raise the productivity of a separators by making their contact faces parts with an excellent sealing characteristic; consequently, the invention is particularly useful in the field of automobile fuel cells, where the realization of mass production is awaited.

**Claims**

1. A fuel cell separator for sandwiching from both sides via diffusion layers an anode and a cathode set against an electrolyte film, **characterized in that** it is made of a mixture of a thermoplastic resin selected from among ethylene / vinyl acetate copolymers and ethylene / ethyl acrylate copolymers and at least one type of carbon particles selected from Ketj en black, graphite and acetylene black.

2. A fuel cell separator according to claim 1, **characterized in that** the proportion of the thermoplastic resin in the mixture is 14 to 20wt% and the proportion of the carbon particles is 80 to 86wt%.

3. A fuel cell separator according to claim 2, **characterized in that** 3 to 20wt% of the carbon particles is Ketjen black.

4. A fuel cell separator according to claim 1, **characterized in that** the proportion of the thermoplastic resin in the mixture is 14 to 20wt%, the proportion of the carbon particles is 70 to 83.5wt%, and a proportion of glass fiber or carbon fiber is 2.5 to 10wt%.

5. A method for manufacturing a fuel cell separator, comprising:

   a step of selecting a thermoplastic resin from among ethylene / vinyl acetate copolymers and ethylene / ethyl acrylate copolymers and selecting at least one type of carbon particles from Ketjen black, graphite and acetylene black;
a step of obtaining a mixture by mixing the selected thermoplastic resin and carbon particles;
a step of obtaining a sheet material by extrusion-molding the mixture with an extruder;
a step of forming gas flow passage grooves in the surface of the sheet material by pressing it; and
a step of obtaining fuel cell separators by cutting the sheet material with the gas flow passages formed in it to a predetermined shape.

6. A fuel cell separator for sandwiching from both sides via diffusion layers an anode and a cathode set against an electrolyte film, **characterized in that** it is made of a mixture including 10 to 34wt% polyphenylene sulfide, 65 to 80wt% graphite, and 1 to 10wt% Ketjen black.

7. A fuel cell separator according to claim 6, **characterized in that** the mixture further includes 5 to 15wt% chopped carbon fiber and the graphite included in the mixture is made 60 to 80wt%.

8. A fuel cell separator according to claim 7, **characterized in that** the viscosity of the polyphenylene sulfide is 20 to 80psi.

# FIG. 1

EP 1 553 651 A1

# FIG. 2

# FIG. 3

# FIG. 4

EP 1 553 651 A1

# FIG. 5

ST10 — THERMOPLASTIC RESIN AND CARBON MATERIAL ARE KNEADED

ST11 — KNEADED MATERIALS ARE EXTRUSION-MOLDED INTO SHEET

ST12 — FUEL GAS PASSAGE GROOVES ARE PRESS-FORMED ON SHEET

ST13 — SHEET WITH GAS PASSAGE GROOVES FORMED THEREON IS CUT TO PREDETERMINED DIMENSIONS

# FIG. 6A

# FIG. 6B

# FIG. 7

EP 1 553 651 A1

**FIG. 8**

EP 1 553 651 A1

# FIG. 9

# FIG. 10

FIG. 11

# FIG. 12

# FIG. 13

# FIG. 14

# FIG. 15

200

(Prior Art)

207  206  204  201  205  207  206

206b  207b

207a

208

207b  206b

209

206b  202  203  209

206a

## INTERNATIONAL SEARCH REPORT

| | International application No. |
| --- | --- |
| | PCT/JP03/10498 |

| A. CLASSIFICATION OF SUBJECT MATTER |
| --- |
| Int.Cl$^7$  H01M8/02, H01M8/10 |

According to International Patent Classification (IPC) or to both national classification and IPC

| B. FIELDS SEARCHED |
| --- |

Minimum documentation searched (classification system followed by classification symbols)
Int.Cl$^7$  H01M8/02, H01M8/10

Documentation searched other than minimum documentation to the extent that such documents are included in the fields searched

| Jitsuyo Shinan Koho | 1922–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)
WPI/L

| C. DOCUMENTS CONSIDERED TO BE RELEVANT |
| --- |

| Category* | Citation of document, with indication, where appropriate, of the relevant passages | Relevant to claim No. |
| --- | --- | --- |
| X<br>Y | JP 2002-25571 A  (Nisshinbo Industries, Inc.),<br>25 January, 2002 (25.01.02),<br>Claims; Par. Nos. [0019] to [0032]<br>(Family: none) | 1-4<br>5 |
| Y | JP 2002-198062 A  (Aisin Seiki Co., Ltd.),<br>12 July, 2002 (12.07.02),<br>Claims; Fig. 1<br>(Family: none) | 5 |
| X<br>Y | JP 8-31231 A  (Shin-Etsu Polymer Co., Ltd.),<br>02 February, 1996 (02.02.96),<br>Claims; Par. Nos. [0006], [0013] to [0018]<br>(Family: none) | 6<br>7-8 |

| ☒ | Further documents are listed in the continuation of Box C. | ☐ | See patent family annex. |
| --- | --- | --- | --- |

| * Special categories of cited documents: | "T" later document published after the international filing date or |
| --- | --- |
| "A" document defining the general state of the art which is not considered to be of particular relevance | priority date and not in conflict with the application but cited to understand the principle or theory underlying the invention |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 01 October, 2003 (01.10.03) | 14 October, 2003 (14.10.03) |

| Name and mailing address of the ISA/ | Authorized officer |
| --- | --- |
| Japanese Patent Office | |
| Facsimile No. | Telephone No. |

Form PCT/ISA/210 (second sheet) (July 1998)

**INTERNATIONAL SEARCH REPORT**

| International application No. |
| --- |
| PCT/JP03/10498 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 2002-100377 A (Kawasaki Steel Corp.), 05 April, 2002 (05.04.02), Claims; Par. No. [0015] (Family: none) | 7-8 |

Form PCT/ISA/210 (continuation of second sheet) (July 1998)

## INTERNATIONAL SEARCH REPORT

| International application No. |
| --- |
| PCT/JP03/10498 |

**Box I    Observations where certain claims were found unsearchable (Continuation of item 2 of first sheet)**

This international search report has not been established in respect of certain claims under Article 17(2)(a) for the following reasons:

1. ☐ Claims Nos.:

   because they relate to subject matter not required to be searched by this Authority, namely:

2. ☐ Claims Nos.:

   because they relate to parts of the international application that do not comply with the prescribed requirements to such an extent that no meaningful international search can be carried out, specifically:

3. ☐ Claims Nos.:

   because they are dependent claims and are not drafted in accordance with the second and third sentences of Rule 6.4(a).

**Box II    Observations where unity of invention is lacking (Continuation of item 3 of first sheet)**

This International Searching Authority found multiple inventions in this international application, as follows:
As described on (extra sheet), there must exist a special technical feature so linking a group of inventions of claims as to form a single general inventive concept in order that the group of inventions may satisfy the requirement of unity of invention.  The international application contains two inventions: the inventions of claims 1-5, and the invention of claims 6-8.

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐    The additional search fees were accompanied by the applicant's protest.

☐    No protest accompanied the payment of additional search fees.

Form PCT/ISA/210 (continuation of first sheet (1)) (July 1998)

**INTERNATIONAL SEARCH REPORT**

International application No.

PCT/JP03/10498

Continuation of Box No. II of continuation of first sheet (1)

There must exist a special technical feature so linking a group of inventions of claims as to form a single general inventive concept in order that the group of inventions may satisfy the requirement of unity of invention. The group of inventions of claims 1-5 are linked only by the technical feature "a separator for fuel cells made of a mixture material of a thermoplastic resin selected from ethylene-vinyl acetate copolymers and ethylene-ethyl acrylate copolymers and carbon particles selected from at least one of Ketjenblack, graphite, and acetylene black". The group of inventions of claims 6-8 are linked only by the technical feature "a separator for fuel cells made of a mixture material containing polyphenyl sulfide, graphite, and Ketjenblack".

The invention of claims 1-5 and the invention of claims 6-8 are not so linked as to form a single general inventive concept.

Therefore, the international application is considered to contain two inventions: the invention of claims 1-5 and the invention of claims 6-8.

Form PCT/ISA/210 (extra sheet) (July 1998)